# EUROPÄISCHE PATENTSCHRIFT

(11) **EP 2 174 030 B1**
(45) Veröffentlichungstag und Bekanntmachung des Hinweises auf die Patenterteilung: **11.09.2013**
(21) Anmeldenummer: 08784295.1
(22) Anmeldetag: 02.07.2008
(51) Int. Cl.: F16D 3/06, B62D 1/185

(54) **ROLLVERSCHIEBEEINHEIT UND GELENKWELLE HIERMIT**
ROLLING-SLIDING UNIT AND CARDAN SHAFT HAVING THE SAME
UNITÉ DE TRANSLATION PAR ROULEMENT ET ARBRE DE TRANSMISSION ASSOCIÉ

(30) Priorität: 26.07.2007 DE 102007035468
(43) Veröffentlichungstag der Anmeldung: 14.04.2010
(73) Patentinhaber: Shaft-Form-Engineering GmbH, 77756 Hausach (DE); BF New Technologies GmbH, 63165 Mühlheim (DE)
(72) Erfinder: DISSER, Claus, 63500 Seligenstadt (DE)
(74) Vertreter: Schmidt, Oliver Jürgen
(86) Internationale Anmeldenummer: PCT/DE2008/001107
(87) Internationale Veröffentlichungsnummer: WO 2009/012746

(56) Entgegenhaltungen:
- EP-A- 1 553 005
- WO-A-2007/036343
- DE-A1- 2 941 065
- GB-A- 2 060 137

## Beschreibung

Die Erfindung betrifft eine Rollverschiebeeinheit mit einer Profilhülse, auf deren Innenfläche zumindest bereichsweise Außenlaufbahnen vorgesehen sind, mit einem in der Profilhülse in axialer Richtung verschiebbaren Zapfen, auf dessen Außenfläche zumindest bereichsweise Innenlaufbahnen vorgesehen sind, und mit Kugeln, die zur Drehmomentübertragung jeweils in einander paarweise zugeordneten Außenlaufbahnen und Innenlaufbahnen angeordnet sind. Eine solche Rollverschiebe einheit ist aus EP 155 3005 A1 bekannt. Weiter betrifft die Erfindung eine Gelenkwelle mit einer derartigen Rollverschiebeeinheit.

Bei herkömmlichen Rollverschiebeeinheiten der oben genannten Art, welche häufig in Gelenkwellen eingesetzt werden, besteht die Gefahr, dass vor dem Einbau in ein Fahrzeug beispielsweise beim Transport Erschütterungen auftreten, die ein schlagartiges Einfahren oder Ausfahren des Zapfens relativ zu der Profilhülse bewirken. Dies kann zu einer Beschädigung der Komponenten der Rollverschiebeeinheit führen, die teilweise erst nachträglich feststellbar sind.

Weiter ist es bei herkömmlichen Rollverschiebeeinheiten der eingangs genannten Art bekannt, den im Betrieb zulässigen maximalen Weg, den der Zapfen relativ zu der Profilhülse verschiebbar ist, dadurch zu begrenzen, dass Sicherungsringe oder dergleichen in den Innenlaufbahnen und/oder den Außenlaufbahnen vorgesehen sind. Die maximale Verschiebestrecke wird folglich dadurch begrenzt, dass die Kugeln und/oder ein ggf. vorgesehener Käfig an einem derartigen Sicherungsring anschlagen. Hierbei wird es als nachteilig empfunden, dass die in der Herstellung vergleichsweise teuren Laufbahnen durch Sicherungsringe oder dergleichen verkürzt werden. Auch aus Gründen der Gewichtsersparnis wird es bevorzugt, den Zapfen möglichst kurz zu halten, ohne dass die Laufbahnen unnötig verlängert werden müssen.

Aufgabe der vorliegenden Erfindung ist es demgegenüber, eine Rollverschiebeeinheit sowie eine Gelenkwelle der eingangs genannten Art bereitzustellen, welche bei kostengünstiger Herstellbarkeit eine hohe Betriebssicherheit gewährleistet.

Diese Aufgabe wird erfindungsgemäß mit einer Rollverschiebeeinheit der eingangs genannten Art im Wesentlichen dadurch gelöst, dass an dem in der Profilhülse einführbaren Ende des Zapfens ein Deckel derart vorgesehen ist, dass sich zumindest ein Abschnitt des Deckels radial nach außen bis in den Bereich wenigstens einer der Außenlaufbahnen erstreckt. Hierdurch ist es möglich, zumindest in einer Verschieberichtung der Rollverschiebeeinheit die volle Länge der Außenlaufbahnen des Zapfens im Betrieb für das rollende Verschieben der Kugeln auszunutzen. Der Deckel verhindert dabei lediglich, dass die Kugeln aus den Laufbahnen herausfallen können. Es ist daher nicht notwendig, die Laufbahnen zu verlängern, nur um einen Einfahr- oder Ausfahranschlag vorsehen zu können.

Überraschenderweise hat sich im Betrieb herausgestellt, dass das Vorsehen des Deckels an dem Zapfen mit einem weiteren erheblichen Vorteil verbunden ist. So kann der Deckel erfindungsgemäß derart an die maximal im Betrieb auftretende Verschiebelänge der Rollverschiebeeinheit angepasst sein, dass der Deckel in der maximal eingefahrenen Position gegen einen beispielsweise ebenfalls als Deckel- ausgebildeten weiteren Anschlag innerhalb der Profilhülse anstößt. Die bei herkömmlichen Rollverschiebeeinheiten ausschließlich auf die Kugeln, den Käfig und/oder die Laufbahnen bzw. deren Anschläge wirkenden Kräfte bei einem stoßartigen Einfahren oder Ausfahren des Zapfens relativ zu der Profilhülse können auf diese Weise zusätzlich von dem Deckel aufgefangen werden.

Hierbei wird es bevorzugt, wenn der Deckel aus einem ggf. geringfügig nachgiebigen Material, wie Kunststoff, besteht. Um gleichzeitig eine ausreichende Festigkeit des Deckels zu erreichen, wird es bevorzugt, wenn dieser aus einem Faserverbundwerkstoff, beispielsweise aus glasfaser- und/oder kohlenstofffaserverstärktem Kunststoff, besteht.

Um den Deckel sicher an dem Zapfen zu halten, ist nach einer bevorzugten Ausführungsform der Erfindung der Zapfen zumindest an seinem in die Profilhülse einführbaren Ende mit einer zentralen Öffnung versehen, wobei der Deckel einen in der Öffnung befestigbaren Vorsprung aufweist. Aus Gründen der Gewichtsersparnis kann die Öffnung des Zapfens auch als eine Durchgangsöffnung ausgebildet sein, so dass auch der Zapfen im Wesentlichen hülsenförmig ausgebildet ist.

Der Vorsprung des Deckels kann dabei entweder eine der Geometrie der Öffnung in dem Zapfen entsprechende Geometrie aufweisen oder eine von dieser verschiedene Geometrie, die jedoch ein Ausrichten und Befestigen des Deckels an dem Zapfen ermöglichen muss. Der Vorsprung kann dabei in die Öffnung eingepresst, eingerastet oder eingeklebt werden und/oder über eine Feder oder dergleichen in der Öffnung gehalten werden.

Wenn der Deckel einen insbesondere zylindrischen Flansch aufweist, dessen radial äußerer Rand die Außenlaufbahnen zumindest teilweise in axialer Richtung verschließt, wird ein Herausfallen der Kugeln bzw. des diese aufnehmenden Käfigs sicher vermieden, ohne die nutzbare Länge der Laufbahnen zu verringern.

Eine besonders sichere Verbindung des Deckels an dem Zapfen kann dadurch erreicht werden, dass der Deckel wenigstens einen in eine der Außenlaufbahnen eingreifenden Vorsprung aufweist. Zur Verbindung des Deckels mit dem Zapfen kann der wenigstens eine Vorsprung des Deckels in wenigstens einer der Außenlaufbahnen befestigbar sein. Dies kann ebenfalls durch ein Verklemmen, Verkleben, Verrasten oder elastisches Andrücken erfolgen. Alternativ kann der Deckel auch einen radial äußeren Rand aufweisen, der bereichsweise über den Stegbereich zwischen den Außenlaufbahnen des Zapfens geschoben wird. Dort kann der Randbereich des Deckels verklemmt, verklebt oder in einer Nut verrastet sein.

Nach einer bevorzugten Ausführungsform der Erfindung ist zwischen der Profilhülse und dem Zapfen ein elastisches Element derart vorgesehen, dass der Zapfen von dem elastischen Element in eine diesen aus der Profilhülse drängende Richtung beaufschlagt wird. Dies verhindert zusätzlich zu dem Vorsehen des Deckels, dass sich die Profilhülse und der Zapfen stoßartig relativ zueinander bewegen, so dass eine Beschädigung der Rollverschiebeeinheit vermieden werden kann. Weiter ist hierbei von Vorteil, dass Gelenkwellen, in denen derartige Rollverschiebeeinheiten häufig eingesetzt werden, teilweise mit Steckverbindungen ausgestattet sind, bei denen zwei miteinander zu verbindende Bauteile ineinander gesteckt werden und dort verrasten. Durch das Vorsehen einer Feder oder dergleichen zwischen dem Zapfen und der Profilhülse der Rollverschiebeeinheit werden diese zusammenzusteckenden Bauteile in Richtung ihrer miteinander in Eingriff befindliche Stellung gedrängt, so dass ein Einrasten erleichtert und ein ungewolltes Lösen während des Betriebs vermieden werden kann.

In Weiterbildung dieses Erfindungsgedankens ist es vorgesehen, dass in und/oder an der Profilhülse eine Einrichtung zum Abstützen eines elastischen Elements vorgesehen ist. So sind in der Profilhülse und/oder einem daran angrenzenden Wellenabschnitt häufig Deckel eingesetzt, die ein Austreten von Schmiermittel verhindern. Ein derartiger zusätzlicher Deckel in der Profilhülse kann eine Anlage zum Abstützen einer Feder bzw. einer Federanordnung bilden. Alternativ hierzu ist es auch möglich, auf der Innenseite der Profilhülse Vorsprünge oder dergleichen vorzusehen, an welchen sich ein elastisches Element abstützen kann.

In gleicher Weise ist vorzugsweise auch in und/oder an dem Deckel eine Einrichtung zum Abstützen eines elastischen Elements vorgesehen. Dabei kann der Flansch des Deckels zum Abstützen einer Feder, insbesondere einer Spiralfeder, dienen oder es kann alternativ oder zusätzlich ein zapfenartiger Vorsprung an dem Deckel vorgesehen sein, der eine Feder zentriert hält.

Die der Erfindung zugrunde liegende Aufgabe wird weiter mit einer Gelenkwelle gelöst, die zwei über ein als Gleichlauffestgelenk ausgebildetes Mittengelenk drehfest miteinander verbundene Wellenabschnitte aufweist, wobei jeweils an dem dem Mittengelenk abgewandten Ende jedes Wellenabschnitts ein Gleichlauffestgelenk angeordnet ist, und wobei die Gelenkwelle darüber hinaus wenigstens eine, insbesondere nahe dem Mittengelenk angeordnete, Rollverschiebeeinheit aufweist, die zwischen einer eingefahrenen und einer ausgefahrenen Position in axialer Richtung längenveränderbar ist, wobei zwischen der Profilhülse der Rollverschiebeeinheit und dem Zapfen der Rollverschiebeeinheit wenigstens ein elastisches Element derart vorgesehen ist, dass die Rollverschiebeeinheit in ihre ausgefahrene Position beaufschlagt wird.

Das beispielsweise als eine Druckfeder ausgebildete elastische Element verhindert dabei einerseits eine ungewollte Relativbewegung der Komponenten der Rollverschiebeeinheit sowohl im Betrieb als auch insbesondere während des Transports und der Montage vor dem Einbau und kann gleichzeitig dazu genutzt werden, weitere Komponenten der Gelenkwelle in einem miteinander drehfest verbundenen Zustand zu halten.

In Weiterbildung dieses Erfindungsgedankens ist es vorgesehen, dass wenigstens einer der Wellenabschnitte und/oder ein mit diesem verbindbares Gelenk über eine Steckverbindung mit einem treibenden oder angetriebenen Bauteil verbindbar ist. Dabei wird es besonders bevorzugt, wenn die Steckverbindung zwei ineinander steckbare und jeweils mit korrespondierenden Längsverzahnungen ausgebildete Bauteile aufweist, die über eine Rasteinrichtung, beispielsweise einen Sicherungsring, in axialer Richtung relativ zueinander fixierbar sind. Die Vorspannung der Rollverschiebeeinheit innerhalb der Gelenkwelle bewirkt dabei, dass die ineinander steckbaren Bauteile der Gelenkwelle im Betrieb sicher miteinander verbunden bleiben, ohne dass die Gefahr besteht, dass sich die Rasteinrichtung oder dergleichen Verbindung löst.

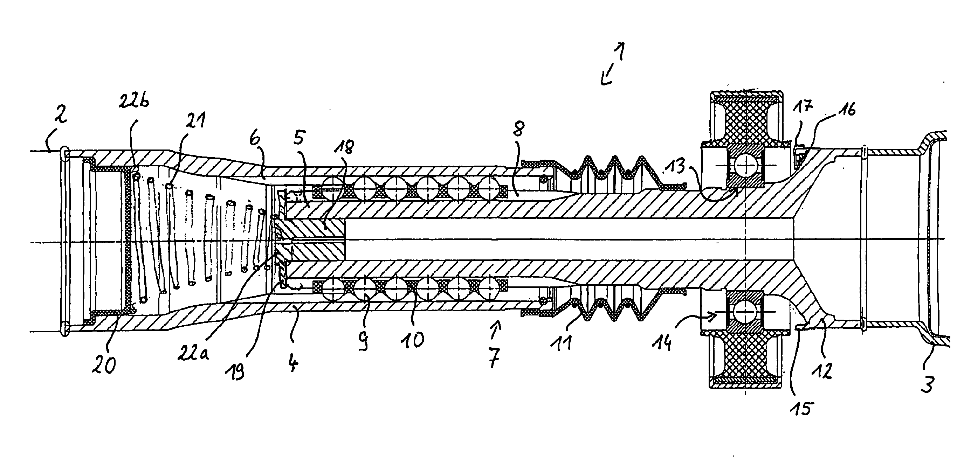

Die Erfindung wird nachfolgend anhand eines Ausführungsbeispiels und unter Bezugnahme auf die Zeichnung näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehungen.

Die einzige Figur zeigt schematisch einen Schnitt durch einen Bereich einer erfindungsgemäßen Gelenkwelle.

Der in der Figur dargestellte Ausschnitt einer Gelenkwelle 1 weist einen ersten Wellenabschnitt, der durch eine Rohrwelle 2 gebildet ist, und einen zweiten in der Figur nicht dargestellten Wellenabschnitt auf, wobei die beiden Wellenabschnitte über ein Mittengelenk drehfest miteinander verbunden sind. Von dem Mittengelenk ist in der Figur lediglich ein Abschnitt der Außennabe 3 dargestellt.

Die Rohrwelle 2 ist in der gezeigten Ausführungsform mit einer Profilhülse 4 verschweißt, die Bestandteil einer Rollverschiebeeinheit ist. In der Profilhülse 4 ist ein Zapfen 5 verschiebbar aufgenommen, der mit der Außennabe 3 des Mittengelenks verschweißt ist. In der Profilhülse 4 sind auf deren Innenfläche bereichsweise Außenlaufbahnen 6 ausgebildet, während in einem Verschiebebereich 7 des Zapfens 5 Innenlaufbahnen 8 ausgebildet sind.

Die Außenlaufbahnen 6 und die Innenlaufbahnen 8 verlaufen dabei parallel zueinander und sind einander paarweise zugeordnet. In jedem Paar aus Außenlaufbahnen 6 und Innenlaufbahnen 8 sind mehrere Kugeln 9 so aufgenommen, dass diese in den Laufbahnpaaren abrollen können. Die Kugeln 9 sind dabei in einem hülsenförmigen Käfig 10 in axialer Richtung geführt. Durch die in den Außenlaufbahnen 6 und den Innenlaufbahnen 8 angeordneten Kugeln 9 kann ein Drehmoment von der Profilhülse 4 auf den Zapfen 5 übertragen werden, während die Profilhülse 4 und der Zapfen 5 leichtgängig in axialer Richtung gegeneinander verschoben werden können. Die Profilhülse 4 ist dabei in axialer Richtung beweglich gegenüber dem Zapfen 5 über einen Faltenbalg 11 abgedichtet.

Der Zapfen 5 weist anschließend an den Verschiebebereich 7 einen gegenüber diesem aufgeweiteten Anbindungsbereich 12 auf. Dieser Anbindungsbereich 12 ist mit dem rohrförmigen Ende der Außennabe 3 des Mittengelenks verschweißt. Angrenzend an den Anbindungsbereich 12 ist auf dem Verschiebebereich 7, der einen kleineren Durchmesser als der Anbindungsbereich 12 aufweist, ein Lagersitz 13 für ein in der dargestellten Ausführungsform elastisch gelagertes Wälzlager 14 vorgesehen.

Der im Wesentlichen mit einer zylindrischen Außenkontur ausgestattete Anbindungsbereich 12 des Zapfens 5 weist einen ringförmigen Vorsprung 15 auf, der benachbart zu dem Wälzlager 14 vorgesehen ist und in Richtung zu dem Verschiebebereich 7 weist. Der ringförmige Vorsprung 15 ist dabei derart ausgebildet, dass zwischen der Außenfläche des Verschiebebereichs 7 und der radial inneren Fläche des Vorsprungs 15 ein ringförmiger Zwischenraum verbleibt.

Dieser Zwischenraum dient zur Aufnahme eines Wuchtgewichts 16, welches über eine Klammer 17 an dem Vorsprung 15 festgelegt ist. Das Wuchtgewicht 16 kann auch auf der radial inneren Seite des Vorsprungs 15 festgeklebt und/oder festgeschweißt sein.

Der ringförmige Vorsprung 15 bildet zusammen mit dem übrigen Anbindungsbereich 12 eine gemeinsame im Wesentlichen zylindrische Außenkontur. Diese ist zur Aufnahme eines zusätzlichen (in der Figur nicht gezeigten) Wuchtgewichts geeignet, welches beispielsweise als ein aufschweißbarer Blechstreifen ausgebildet sein kann.

Auf der dem Anbindungsbereich 12 abgewandten Seite ist der Lagerzapfen 5 durch einen Deckel 18 verschlossen, der in die zentrale Bohrung oder Öffnung 19 des Zapfens 5 mit einem beispielsweise zylindrischen Abschnitt eingesetzt ist. Der Deckel 18 weist dabei einen Flanschbereich 19 auf, der sich radial nach außen zumindest bis zu den Innenlaufbahnen 8 erstreckt, so dass der Flansch 19 ein Herausfallen der Kugeln 9 bzw. des Käfigs 10 verhindern kann.

Zwischen einem in der Profilhülse 4 vorgesehenen weiteren Deckel 20 und dem in den Zapfen 5 eingesetzten Deckel 18 ist in der dargestellten Ausführungsform eine Spiralfeder 21 vorgesehen. Die sich an den beiden Deckeln 18 und 20 abstützende Feder 21 drängt somit den Zapfen 5 in der Figur nach rechts, d.h. in seine aus der Profilhülse 4 herausgeschobene Stellung.

Die Feder 21 kann dabei einerseits zum Einrasten einer in der Figur nicht dargestellten Anbindung des Mittengelenks an den zweiten Wellenabschnitt dienen und sorgt andererseits dafür, dass der Zapfen 5 und die Profilhülse 4 vor dem Einbau, d.h. während des Transports und der Montage nicht frei gegeneinander verschiebbar sind, so dass Beschädigungen durch ein stoßartiges Einfahren oder Ausfahren des Zapfens 5 aus der Profilhülse vermieden werden können.

Zur Aufnahme der Druckfeder 21, die ggf. auch als ein Tellerfederpaket oder ein anderes geeignetes elastisches Element ausgestaltet sein kann, sind sowohl an dem Deckel 18 des Zapfens 5 als auch an dem Deckel 20 der Profilhülse 4 entsprechende Haltevorsprünge 22a, 22b vorgesehen. In der gezeigten Ausführungsform ist die Feder 21 als eine Spiralfeder ausgebildet, so dass sich der Deckel 18 mit dem Vorsprung 22a an den Deckel 20 anlegen kann, während die Feder 21 platzsparend zwischen den Vorsprüngen 22a und 22 b aufgenommen ist.

## Patentansprüche

1. Rollverschiebeeinheit, insbesondere für eine Gelenkwelle,
mit einer Profilhülse (4), auf deren Innenfläche zumindest bereichsweise Außenlaufbahnen (6) vorgesehen sind,
mit einem in der Profilhülse (4) in axialer Richtung verschiebbaren Zapfen (5), auf dessen Außenfläche zumindest bereichsweise Innenlaufbahnen (8) vorgesehen sind, wobei die Außenlaufbahnen (6) und die Innenlaufbahnen (8) einander paarweise zugeordnet sind,
mit Kugeln (9), die zur Drehmomentübertragung in den Paaren von Außenlaufbahnen (6) und Innenlaufbahnen (5) angeordnet sind,
**dadurch gekennzeichnet,**
**dass** an dem in die Profilhülse (4) einführbaren Ende des Zapfens (5) ein Deckel derart vorgesehen ist,
**dass** sich zumindest ein Abschnitt des Deckels (18) radial nach außen bis in den Bereich wenigstens einer der Außenlaufbahnen (6) erstreckt.

2. Rollverschiebeeinheit nach Anspruch 1,
**dadurch gekennzeichnet,**
**dass** der Zapfen (5) zumindest an seinem in die Profilhülse (4) einführbaren Ende mit einer zentralen Öffnung versehen ist,
und **dass** der Deckel (18) einen in der Öffnung befestigbaren Vorsprung (15) aufweist.

3. Rollverschiebeeinheit nach Anspruch 1 oder 2,
**dadurch gekennzeichnet,**
**dass** der Deckel (18) einen insbesondere zylindrischen Flansch (19) aufweist, dessen radial äußerer Rand die Außenlaufbahnen (6) zumindest teilweise in axialer Richtung verschließt.

4. Rollverschiebeeinheit nach einem der vorhergehenden Ansprüche,
**dadurch gekennzeichnet,**
**dass** zwischen der Profilhülse (4) und dem Zapfen (5) ein elastisches Element (21) derart vorgesehen ist, dass der Zapfen (5) von dem elastischen Element (21) in eine den Zapfen (5) aus der Profilhülse (4) drängenden Richtung beaufschlagt wird.

5. Rollverschiebeeinheit nach Anspruch 4,
**dadurch gekennzeichnet,**
**dass** in und/oder an der Profilhülse (4) eine Einrichtung zum Abstützen des elastischen Elements (21) vorgesehen ist.

6. Rollverschiebeeinheit nach einem der Ansprüche 4 oder 5,
**dadurch gekennzeichnet,**
**dass** in und/oder an dem Deckel (18) eine Einrichtung zum Abstützen des elastischen Elements (21) vorgesehen ist.

7. Gelenkwelle (1) mit zwei über ein als Gleichlauffestgelenk ausgebildetes Mittengelenk drehfest miteinander verbundenen Wellenabschnitten,
wobei jeweils an dem dem Mittengelenk abgewandten Ende jedes Wellenabschnitts ein Gleichlauffestgelenk angeordnet ist,
und mit wenigstens einer, insbesondere nahe dem Mittengelenk angeordneten, Rollverschiebeeinheit nach einem der vorhergehenden Ansprüche 4 bis 6, die zwischen einer eingefahrenen und einer ausgefahrenen Position in axialer Richtung längenveränderbar ist.

8. Gelenkwelle (1) nach Anspruch 7,
**dadurch gekennzeichnet,**
**dass** wenigstens einer der Wellenabschnitte und/oder ein mit diesem verbundenes Gelenk über eine Steckverbindung mit einem treibenden oder angetriebenen Bauteil verbindbar ist.

9. Gelenkwelle (1) nach Anspruch 8,
**dadurch gekennzeichnet,**
**dass** die Steckverbindung zwei ineinander steckbare und jeweils mit korrespondierenden Längsverzahnungen ausgebildete Bauteile aufweist, die über eine Rasteinrichtung in axialer Richtung relativ zueinander fixierbar sind.

## Claims

1. Roller sliding unit, especially for a cardan shaft,
with a profile sleeve (4) on whose inner surface, in certain areas at least, outer raceways (6) are provided,
with a pin (5), moveable in the axial direction in the profile sleeve (4), on whose outer surface, in certain areas at least, inner raceways (8) are provided,
whereby the outer raceways (6) and the inner raceways (8) are assigned to each other in pairs,
with balls (9) which are assigned to the pairs of outer raceways (6) and inner raceways (5) for torque transmission,
**characterised by** a lid being provided for the end of the pin (5) which is inserted into the profile sleeve (4) in such a way
that at least one section of the lid (18) extends out radially into the area of at least one of the outer raceways (6).

2. Roller sliding unit in accordance with claim 1, **characterised by** the pin (5) having at least one central opening at the end which is inserted into the profile sleeve (4) and the lid (18) having a projection that can be attached in the opening (15).

3. Roller sliding unit in accordance with claim 1 or 2, **characterised by** the lid (18) having an especially cylindrical flange (19), whose radial outer edge at least partially closes the outer raceways (6) in the axial direction.

4. Roller sliding unit in accordance with one of the previous claims, **characterised by** an elastic element (21) being provided between the profile sleeve (4) and the pin (5) in such a way that the pin (5) is pressurised by the elastic element (21) in a direction that presses the pin (5) out of the profile sleeve (4).

5. Roller sliding unit in accordance with claim 4, **characterised by** a device being provided in and/or on the profile sleeve for supporting the elastic element (21).

6. Roller sliding unit in accordance with claim 4 or 5, **characterised by** a device for supporting the elastic element (21) being provided in and/or on the lid (18).

7. Cardan shaft (1) with two shaft sections being connected together so that they cannot twist via a centre joint designed as a fixed constant velocity joint, whereby a fixed constant velocity joint is always arranged on the end of each shaft section pointing away from the centre joint,
and with at least one roller sliding unit, arranged especially close to the centre joint, in accordance with one of the previous claims 4 to 6, which can be length-adjusted in the axial direction between a retracted and an extended position.

8. Cardan shaft (1) in accordance with claim 7, **characterised by** at least one of the shaft sections and/or one joint connected with this, being able to connect with a driving or driven component via a plug-in connector.

9. Cardan shaft (1) in accordance with claim 8, **characterised by** the plug-in connector having two interlocking components and each having corresponding longitudinal toothing, which can be fixed relative to one another in the axial direction by a locking device.

## Revendications

1. Unité de translation par roulement, en particulier pour un arbre de transmission,
avec un manchon profilé (4), sur la surface intérieure duquel sont prévues au moins par endroits des pistes de roulement extérieures (6),
avec un tourillon (5), mobile en translation axiale dans le manchon profilé (4) et sur la surface extérieure duquel sont prévues au moins par endroits des pistes de roulement intérieures (8),
sachant que les pistes de roulement extérieures (6) et les pistes de roulement intérieures (8) sont mutuellement associées par paires,
avec des billes (9) qui sont disposées pour la transmission de couple dans les paires de pistes de roulement extérieures (6) et de pistes de roulement intérieures (5),
**caractérisée en ce qu'**un couvercle est prévu à l'extrémité du tourillon (5) pouvant être introduite dans le manchon profilé (4) de telle sorte qu'au moins une partie du couvercle (18) s'étend radialement vers l'extérieur jusque dans la région d'au moins une des pistes de roulement extérieures (6).

2. Unité de translation par roulement selon la revendication 1, **caractérisée en ce que** le tourillon (5) est pourvu au moins à son extrémité pouvant être introduite dans le manchon profilé (4) d'une ouverture centrale,
et **en ce que** le couvercle (18) présente une saillie (15) pouvant être fixée dans l'ouverture.

3. Unité de translation par roulement selon la revendication 1 ou 2, **caractérisée en ce que** le couvercle (18) présente une bride (19) notamment cylindrique, dont le bord radialement extérieur ferme les pistes de roulement extérieures (6) au moins partiellement en direction axiale.

4. Unité de translation par roulement selon l'une des revendications précédentes, **caractérisée en ce qu'**un élément élastique (21) est prévu entre le manchon profilé (4) et le tourillon (5) de telle sorte que le tourillon (5) est sollicité par l'élément élastique (21) dans un sens repoussant le tourillon (5) hors du manchon profilé (4).

5. Unité de translation par roulement selon la revendication 4, **caractérisée en ce qu'**un dispositif pour soutenir l'élément élastique (21) est prévu dans et/ou sur le manchon profilé (4).

6. Unité de translation par roulement selon l'une des revendications 4 ou 5, **caractérisée en ce qu'**un dispositif pour soutenir l'élément élastique (21) est prévu dans et/ou sur le couvercle (18).

7. Arbre de transmission (1) avec deux parties d'arbre mutuellement reliées en solidarité de rotation au moyen d'une articulation médiane réalisée sous la forme d'un joint homocinétique fixe,
sachant qu'un joint homocinétique fixe respectif est disposé à l'extrémité de chaque partie d'arbre qui est opposée à l'articulation médiane,
et avec au moins une unité de translation par roulement, en particulier selon l'une des revendications précédentes 4 à 6, disposée notamment près de l'articulation médiane et dont la longueur peut être modifiée en direction axiale entre une position rentrée et une position déployée.

8. Arbre de transmission (1) selon la revendication 7, **caractérisé en ce qu'**au moins une des parties d'arbre, et/ou une articulation reliée à celle-ci, peut être reliée au moyen d'un assemblage par emboîtement à un élément menant ou mené.

9. Arbre de transmission (1) selon la revendication 8, **caractérisé en ce que** l'assemblage par emboîtement présente deux éléments pouvant être emboîtés l'un dans l'autre et respectivement réalisés avec des dentures longitudinales correspondantes, qui peuvent être immobilisés l'un par rapport à l'autre en direction axiale au moyen d'un dispositif d'encliquetage.
